# EUROPEAN PATENT SPECIFICATION

(11) **EP 1 744 927 B1**
(45) Date of publication and mention of the grant of the patent: **11.03.2009**
(21) Application number: 05702931.6
(22) Date of filing: 09.02.2005
(51) Int. Cl.: B60N 2/02, B60N 2/06, H02K 41/02

(54) **VEHICLE SEAT MOTION MECHANISM**
FAHRZEUGSITZBEWEGUNGSMECHANISMUS
MECANISME DE DEPLACEMENT DE SIEGE DE VEHICULE

(30) Priority: 11.05.2004 TR 200401057
(43) Date of publication of application: 24.01.2007
(73) Proprietor: MEKATRO ARASTIRMA GELISTIRME VE TICARET ANONIM SIRKETI, 34457 Istanbul (TR)
(72) Inventor: TUNCAY, R., SISLI, 34457 Istanbul (TR); USTUN, Ozgur, Bakirkoy, 34144 Istanbul (TR); YILMAZ, Murat, 34306 Istanbul (TR)
(74) Representative: Berkkam, Ayfer
(86) International application number: PCT/IB2005/050511
(87) International publication number: WO 2005/108149

(56) References cited:
- WO-A-94/13055
- DD-A1- 255 229
- DE-A1- 3 210 343
- DE-A1- 10 062 217
- US-A- 3 456 136
- US-A- 4 774 442
- US-A- 5 299 853
- US-A- 5 435 625
- US-B1- 6 349 914
- PATENT ABSTRACTS OF JAPAN vol. 2000, no. 07, 29 September 2000 (2000-09-29) -& JP 2000 102237 A (AMADA CO LTD), 7 April 2000 (2000-04-07)

## Description

**Technical field**

This invention relates to direct drive, embedded mechanisms which enable the vehicle seats to move by means of a linear motor. In the mechanism subject to the present invention, the linear electrical motor is designed to be integrated with the linear electric motor which moves the vehicle seat; thus, a direct drive is achieved without the necessity of using any kind of a rotating/shifting motion converter.

**Prior art**

In the currently used automotive technology, by taking passenger comfort and safety into account there are two main methods to adjust vehicle seat positions by m oving the seats back and forth. In the first method, the seat position is adjusted by sliding the seats on the rails by man power instead of utilizing an electrical motor. In the other, the vehicle seats are driven by an electrical motor. In both methods the seat position is fixed after adjustment to resist a crashing effect during an accident.

In the present technique, the forward and backward movement of the seat is enabled by the electrical energy of a rotating electrical motor. In these kinds of systems, the rotational motion of an electrical machine is transformed into a linear motion by means of a mechanical motion converter, thus a shifting motion of the seat is enabled. In this aspect, the electrical motor actuates an endless screw mechanism and in return a nut connected to the endless screw ensures the linear motion by sliding on a linear sliding bearing. When the seat is brought to the desired position by the passenger, the control handle is turned off manually by the passenger and the energy of the motor is cut off. As a mechanic converter, which converts the rotational movement to a linear movement, is used in these systems, an extra volume and weight arises, additional losses occurs, response time becomes longer, position control precision reduces, and the risk of failure increases.

Among the known embodiments of the art, 5299853, 5320413, 5582461 and 5556165 numbered United States patents disclose various vehicle seat motion mechanisms which enable the seats to move back and forth in a linear direction. In these patents, an endless screw similar to the above mentioned one, which converts the shifting motion to a rotational motion, enables the seat to move backwards and forwards. One end of this screw is connected to the moveable seat, while the other motionless part is fixed to the vehicle body. This screw also has a locking mechanism. Another endless screw that is used in the same system pulls the lever which adjusts the angle of the seat back and forth; thus, the inclination of the seat can be changed. However in this mechanism, the linear movement is also converted from a rotational movement by means of a mechanic converter as mentioned above. None of the above patents utilize direct motor or a similar electro mechanic embodiment known as a linear motor.
US-A-5 435 625 describes a motion mechanism of a vehicle seat provided with an embedded linear motor according to the preamble of claim 1.

**Brief description of the invention**

The object of this invention is to develop a vehicle seat motion mechanism which is directly driven by a linear electrical motor.

In the inventive mechanism the linear electrical motor is designed to be placed inside the motion mechanism. This enables the vehicle seat to be driven directly without utilizing a mechanical converter that performs a rotational/linear motion. This is also an embedded integrated system, as the rail and the linear motor are placed inside the same structure.

The linear motor, which is the subject of this patent application, creates a shifting force in the drive system by utilizing a unique electromagnetic structure instead of a rotating movement; thus, the problems caused by the mechanical converter are avoided.

**Detailed description of the invention**

The vehicle seat motion mechanism realized in order to attain this object of the invention has been illustrated in the attached drawings, wherein;

figure 1 - is a perspective view of the vehicle seat motion mechanism together with the seat;

Figure 2 - is a perspective view of the rail;

Figure 3 - is a perspective view of the double sided linear motor mechanism;

Figure 4 - is a perspective view of the double sided linear motor mechanism without the cover;

Figure 5 - is a schematic cross section view of the single sided brushless direct current motor;

Figure 6 - is a perspective view of the single sided linear motor mechanism.

Figure 7 - is a perspective view of the cylindrical linear motor mechanism.

Figure 8 - is a schematic view of a DC supply;

Figure 9 - is a side view of the locking mechanism on the rail and the cover;

Figure 10 - is a top view of the locking mechanism;

The components in the figures have each been numbered corresponding the following:
1. Seat
2. Cover
3. Rail
4. Groove
5. Notch
6. Magnet
7. Seat movement mechanism
8. Coil
9. Electronic assembly
10. Ball
11. Flange
12. Linear motor (actuator)
13. Channel
14. Inverter
15. Control circuit
16. Position change request
17. Direction determination request
18. Locking mechanism
19. Solenoid
20. Pin
21. Core
22. Back iron
23. Air gap

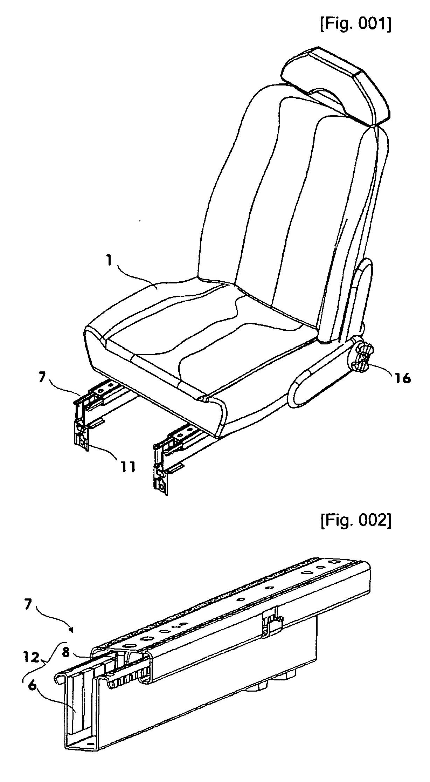

The vehicle seat movement mechanism (7), subject to the present invention, basically comprises a rail (3) which enables the seat (1) to move on the vehicle base and a cover (2) which slides on the rail (3) and distinguishes from prior art embodiments with the linear motor (6 and 8) which is integrated with the said rail (3) and the cover (2) (Figure 1).

The part which is called the rail (3) is fixed from inside to the vehicle base by means of a flange (11) and it is stationary with respect to the vehicle body (Figure 2). The rail (3) is a U-formed profile. Both the two upper edges of this profile are bent first in an outward-horizontal plane and then in downward-vertical planes and in this way eaves (3a) which are parallel to the outside of the profile's side walls are achieved. In other words, channels (3b) are formed between these eaves and the side walls of the U profile.

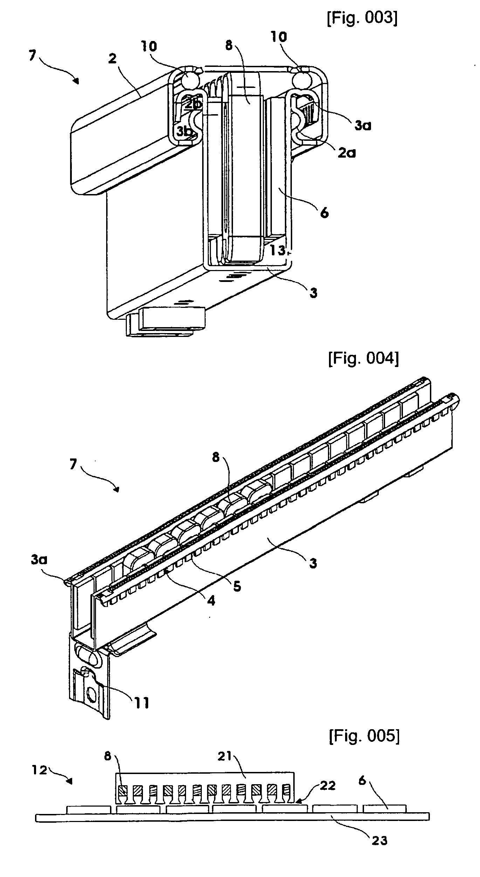

The part which is called the cover (2) is moveably fixed to the seat (1) from the bottom. The cover (2) is a profile in an inverted U-form which is located on the rail (3) and which can slide back and forth longitudinally. The edges of the cover are bent first in inward-horizontal planes and then in upward-vertical planes, and in this way eaves (2a) which are parallel to the inside of the profile's side walls are achieved. Thus, channels (2b) are formed between the eaves (2a) and the side walls of the inverted U profile. When the cover (2) is fixed on the rail (3), the two parts are interlocked by placing the rail eaves (3a) inside the cover channels (2b) and the cover eaves (3b) inside the rail channels. The balls (10), located between the edges of the rail and the cover, facilitate the sliding motion by minimizing the abrasion impact which arise from the movement of the two parts with respect to each other (Figures 3, 6 and 7)

The most important feature of the inventive vehicle motion mechanism (7) is the transfer of the linear shifting motion, which is created when current flows through the coils (8), to the cover (3) and then to the seat (1) by fixing the magnet (6) and the armature coils (8) of the linear motor separately on the rail (3) and on the cover (2) of the slide.

In order for the linear motor to create a shifting movement on the seat by producing an electromagnetic force, a current appropriate to the position of the magnet (6) is passed through every phase coil (8). This current takes positive, zero and negative values at certain intervals. The directions of the currents in the coils (8) are arranged in such a way that they produce a positive shifting force at every coil by taking into account the direction of the magnetic flux produced by the magnets (6). Consequently, a linear movement is ensured in a single direction. If a reverse movement is desired, a current that produces a negative force in all the coils (8) is provided. As the currents of the coil (8) change direction according to the corresponding magnets (6), the position of the coils (8) with respect to the magnets (6) have to be determined at every moment during the movement. This is generally detected by the position sensors.

In accordance with this basic principle, different types of linear motors are utilized in different embodiments of the invention. The embodiment of the invention shown in Figures 3 and 4 utilizes a double sided linear motor. The magnets (6) of the linear motor (12) which produce a shifting movement are fixed from inside to the vertical side walls of the rail (3); thus, they are located at the fixed part of the slide. The poles of the magnets which are placed side by side on the same wall are opposites. The armature coils (8) of the motor, on the other hand, are located on the moving part of the slide, in other words, on the cover (2). The armature coils (8) extend inside the rail (3) from the cover (2) to the channel (13) which is in between the magnets (6). The armature coils (8) are fixed on a support which is preferably located under the cover (2), which functions as a casing and which is produced from a durable material. There is no mechanical contact between the coils (8) and the magnet(s) (6). As a change in magnetic flux occurs when the coils (8) are energized with an electric current, a shifting force occurs between the magnets and the coils. In this embodiment, as magnets are fastened on fixed parts and as coils are fastened on moving parts the movement occurs on the coils.

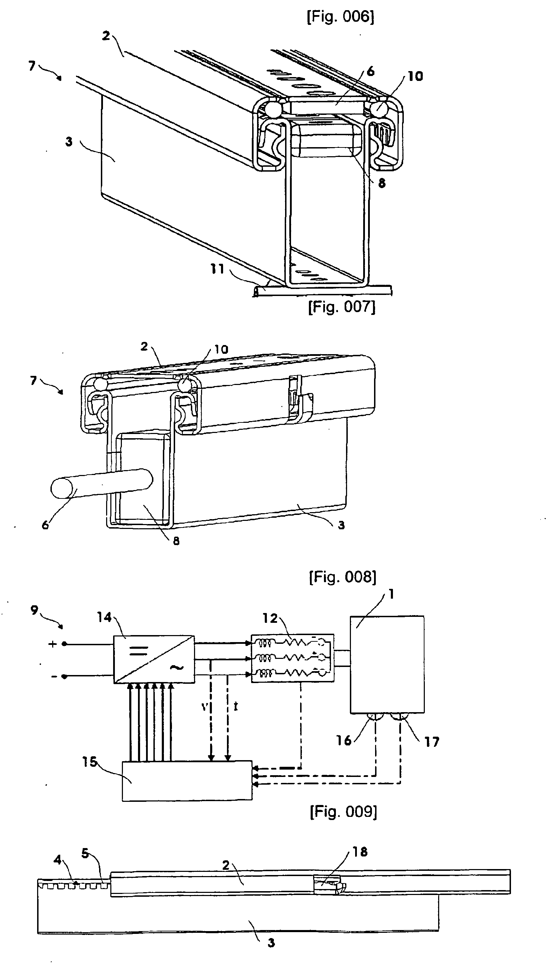

Another embodiment of the invention, as shown in Figure 6, presents a single sided linear motor. A general model of single sided linear motors is shown in Figure 5. Basically, a linear motor of this type consists of magnets (6) placed side by side having opposite poles with tri-phase armature coils (8) which are placed inside the core (21). With the interaction between the magnetic field at a vertical direction formed by the magnets (6) and the magnetic field also at a vertical direction formed by the current that flows through the coils (8) which are perpendicular to the paper plane, a horizontally directed shifting force within the paper plane is produced. In figure 5, the air gap (22) between the magnets and the coils (8) and the back iron (23) which defines the direction of the magnetic flux are shown.

A single sided linear brushless direct current motor is a motor that is known and used in the art. The innovation provided with the present invention is to utilize the said motor in seat motion mechanisms by integrating it with the rail and the cover. As also seen in Figure 6, while the armature coils (8) of the linear motor are placed inside the rail (3), the magnets (6) are fixed inside the cover (2). In this configuration, rail (3) and cover (2), which are made of a metal, are also utilized as a back iron (22) to complete the magnetic field circuit, so there is no need for a separate back iron. Depending on the same basis, it is also possible to fix the armature coils (8) to the cover (2), and magnets (6) to the rail (3). In brief, a horizontal force is produced between the magnetic field formed by the magnets and the magnetic field formed by the armature coil currents; thus, the seat's movement is ensured.

In another embodiment of the invention, a cylindrical (tubular) linear motor is preferred (Figure 7). The coils (8) and the magnets (6) of this motor are positioned as telescopic cylinders which can move telescopically inside each other. It is possible to place the coils inside or outside. When every element of the (6 or 8) motor is fixed on one of the parts (2 or 3) of the slide, the shifting force created between the two elements will move the seat back and forth: to illustrate, it is possible to fix the coil (8) on the rail (3), the magnet (6) on the cover (2) or the coil (8) on the cover (2), or the magnet (6) on the rail (3).

An electronic assembly (9) is necessary to control and to regulate the function of the motors used in the three different embodiments mentioned above, namely in the single sided, double sided and cylindrical linear motors (Figure 8). This assembly comprises a power electronic circuit which feeds the coils, a sensor which determines the position of the magnets or an operation software that determines the position without a sensor and a control circuit (15) to organize all operations. The diagram provided in Figure 8, an inverter (14) as an power electronic circuit that feeds the motor (12), a control circuit (15) and a position change request (16) formed by the passenger and conductors which carry the data regarding the direction determination request (17). These conductors carry the signal regarding the direction and position change requests to the control circuit (15). These two cables used currently in certain electrical seat shifting mechanisms, are fixed to a single lever which is located at the side of the seat and which enables the passenger to determine the movement of the seat back and forth. The passenger pushes this handle forward for forward actuation and backwards for backward actuation.

When the force of the push is increased and the maximum motion of the lever is reached, a direction request as mentioned above is signaled.

When the passenger determines the change of position and its direction, this data reaches the data control circuit (15) which in turn generates the data regarding the direction of the current and to which phase coils (8) of the motor this current will be sent, depending on the position of the coils (8) with respect to the magnets and sends an appropriate triggering signals to the inverter (14). The semiconductors in the inverter feed the coils (8) with these triggering signals by shifting to transmission and cut-off position. Thus, the seat moves in the desired direction and when the passenger removes his/her hand from the pushbutton the motor is stopped by generating a data that the desired position is achieved. The seat locking mechanism, which prevents the forward and backward motion of the seat, operates and fixes the position of the seat.

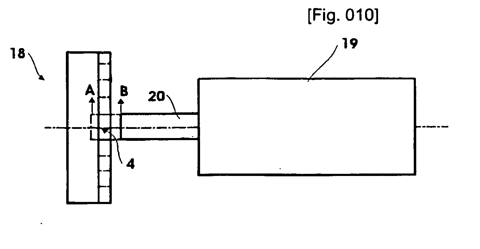

This seat locking mechanism (18) consists of grooves or holes (4) located in one part (2 or 3) of the movement mechanism (7) and a pin (20) which is located in the other part that locks the seat by being placed in these grooves/holes and a solenoid (19) which control the motion of this pin (Figs. 9 and 10). In the preferred embodiment of the invention, there is a set of grooves (4) opened at the eave located on at least one side of the rail (3) and notches (5) which are separated from each other by means of the said grooves. The pin (20) located in the solenoid which is inside the cover and which is pushed by a spring, normally (position A) resides inside one of the grooves (4) and prevents the cover (2) and the rail (3) from moving with respect to each other, thereby locks the seat. When an electric current is supplied to the solenoid (19), the pin (20) is pulled back (position B) and it moves out of the slot (4). Thus, the cover (2) and seat (1) to which it is fastened is unlocked and the linear motor (12) drives the seat to a new location. When the passenger removes his hand from the position change request button (16), it is understood that the desired location of the seat is reached and the electric supply of the solenoid (19) is cut off. Thus the spring throws the pin inside a slot (4) (position 4) which is at an opposite position at that time. Therefore, the seat is again locked until a new position change request comes.

To provide a better understanding, the motion mechanism subject to the present invention is described with examples and attached drawings. However, the scope of the invention cannot be limited with these examples and it is possible to develop other embodiments based on the concept of the invention. The scope of the invention is as disclosed in the claims.

## Claims

1. A motion mechanism (7) comprising an embedded linear electric motor (12) as an integrated part of the motion mechanism (7) of a vehicle seat (1) to adjust the position of the seats, **characterized in that** linear electric motor (12) comprises magnets (6) and an armature coil (8) which are separately placed on the rail (3) fixed to the vehicle and the cover (2) fixed to the seat.

2. A motion mechanism (7) of a vehicle seat as defined in Claim 1, **characterized by** a linear motor (12), through its every coil (8) a current which is appropriate to the position of the magnet (6), and which takes positive, zero and negative values at certain intervals, passes.

3. A motion mechanism (7) of a vehicle seat as defined in Claims 1 or 2 **characterized by** a double sided type linear motor (12) comprising two rowed magnets (6) which are fixed onto the inner face of the vertical side walls of the rail (3) wherein their poles are opposite and armature coils (8) which are fixed on the cover (2) and which extend inside the rail (3) to the channel (13) that is in between the magnets (6) located on both sides.

4. A motion mechanism (7) of a vehicle seat as defined in Claim 3, **characterized by** a linear motor (12), comprising armature coils (8), which are located on the bottom part of the cover (2) and which form a cap and a casing for the coils (8), and which are fastened on a support that is made of a durable material.

5. A motion mechanism (7) of a vehicle seat as defined in claims 1 or 2, **characterized by** a single sided type linear motor (12) comprising armature coils (8) which are placed inside the rail (3) and single rowed magnets (6) fixed inside the cover (2).

6. A motion mechanism (7) of a vehicle seat as defined in claims 1 or 2 **characterized by** a cylindrical type linear motor (12) having coils (8) and magnets (6) which are positioned as telescopic cylinders which can move telescopically inside each other and wherein its every element (6 or 8) is fixed separately on the rail or on the cover (2 or 3).

7. A motion mechanism (7) of a vehicle seat as defined in any one of the claims above **characterized by** an electronic assembly (9) comprising an electronic power circuit which feeds the coils and a control circuit (15) which regulates all operation by means of a sensor that determines the position of the magnets or an operation software that determines the position without a sensor.

8. A motion mechanism (7) of a vehicle seat as defined in claim 7 **characterized by** an electronic power circuit comprising conductors which feed the motor (12) and which carry the data that is produced by the inverter (14), control circuit (15) and the passenger regarding the position change request (16) and the direction determination request (17).

9. A motion mechanism (7) of a vehicle seat as defined in any one of the claims above **characterized by** a lever on which the conductors are fastened and which is located at the side of the seat and which defines the back and forth motion when the passenger moves it.

## Patentansprüche

1. Eine Bewegungsvorrichtung (7) mit einem eingebetteten elektrischen Linearmotor (12) als ein integraler Bestandteil dieser Bewegungsvorrichtung (7) eines Fahrzeugsitzes (1) zur Einstellung der Lage des Sitzes,
**dadurch gekennzeichnet,**
**daß** der elektrische Linearmotor (12) Magnete (6) und Ankerspule (8) aufweist, die gesondert auf der Schiene (3) und dem Gehäuse angeordnet sind.

2. Eine Bewegungsvorrichtung (7) eines Fahrzeugsitzes wie im Anspruch 1 beschrieben wurde, **gekennzeichnet durch** einen Linearmotor (12), **durch** dessen jede Windung (8) ein je nach der Lage des Magneten (6) entsprechender und in bestimmten Intervallen positive Werte, negative Werte sowie Nullwerte annehmender elektrischer Strom durchfließt.

3. Eine Bewegungsvorrichtung (7) eines Fahrzeugsitzes wie im Anspruch 1 oder im Anspruch 2 beschrieben wurde, **gekennzeichnet durch** einen doppelseitigen Linearmotor (12), der zweireihige Magnete (6) aufweist, die an die Innenfläche der vertikalen Seitenwände der Schiene (3) befestigt sind, wobei ihre Polen entgegengesetzt sind und ihre auf das Gehäuse (2) befestigten Ankerspulen (8) sich im Innern der Schiene (3) bis zur Führung (13), welche sich zwischen den auf beiden Seiten angeordneten Magneten (6) befindet, erstrecken.

4. Eine Bewegungsvorrichtung (7) eines Fahrzeugsitzes wie im Anspruch 3 beschrieben wurde, **gekennzeichnet durch** einen Linearmotor, der Ankerspulen (8) aufweist, die am unteren Teil des Gehäuses (2) angeordnet sind und einen Deckel sowie einen Mantel für die Spulen (8) ausbilden sowie an eine Abstützung aus einem beständigen Material befestigt sind.

5. Eine Bewegungsvorrichtung (7) eines Fahrzeugsitzes wie im Anspruch 1 oder im Anspruch 2 beschrieben wurde, **gekennzeichnet durch** einen einseitigen Linearmotor (12) umfassend Ankerspulen (8), die in der Innenseite der Schiene (3) angeordnet sowie einreihige Magnete (6), die in die Innenseite des Gehäuses (2) befestigt sind.

6. Eine Bewegungsvorrichtung (7) eines Fahrzeugsitzes wie im Anspruch 1 oder im Anspruch 2 beschrieben wurde, **gekennzeichnet durch** einen zylindrischen Linearmotor (12) mit Spulen (8) und Magneten (6), die als teleskopische Zylinder, welche teleskopisch ineinander bewegen können und wobei ihre einzelne Elemente ( 6 oder 8) gesondert an die Schiene oder an das Gehäuse (2 oder 3) befestigt sind.

7. Eine Bewegungsvorrichtung (7) eines Fahrzeugsitzes wie in einem der vorhergehenden Ansprüche beschrieben wurde, **gekennzeichnet durch** eine elektronische Ausrüstung (9), die einen elektronischen Kraftstromkreis umfaßt, welcher die Spulen und einen Regelkreis (15) einspeist, der mit Hilfe eines die Lage der Magneten bestimmenden Messfühlers oder einer ohne einen Messfiihler die Lage bestimmenden Betriebs-Software alle Arbeitsvorgänge regelt.

8. Eine Bewegungsvorrichtung (7) eines Fahrzeugsitzes wie im Anspruch 7 beschrieben wurde, **gekennzeichnet durch** einen elektronischen Kraftstromkreis umfassend Leitungen, die den Motor (12) einspeisen und die durch einen Umrichter (14), den Regelkreis sowie von den Fahrgästen bezüglich der Anforderung nach Lageänderung (16) sowie bezüglich der Anforderung nach Bestimmung der Richtung (17) hergestellten Daten übertragen.

9. Eine Bewegungsvorrichtung (7) eines Fahrzeugsitzes wie in einem der vorhergehenden Ansprüche beschrieben wurde, **gekennzeichnet durch** einen Hebel, an den die Leitungen befestigt sind und welcher am Rand des Sitzes angeordnet ist und infolge der Betätigung **durch** den Fahrgast die Rückwärtssowie Vorwärtsbewegung bestimmt.

## Revendications

1. Un mécanisme de motion (7) comprenant un moteur électrique linéaire encastré (12) comme une partie intégrée au mécanisme de motion (7) d'un siège d'un véhicule (1) en vue d'ajuster la position des sièges ; **caractérisé en ce que** le moteur électrique linéaire (12) comprend des aimants (6) et une bobine d'armature (8) qui sont placés séparément sur le rail (3) fixé au véhicule et sur la couverture (2) fixée au siège.

2. Un mécanisme de motion (7) d'un siège d'un véhicule selon la revendication 1, **caractérisé par** un moteur linéaire (12), et à travers de son chaque bobine (8), un courant qui est approprié à la position de l'aimant (6) et qui prend les values de positif, zéro et négatif dans certains intervalles, passes.

3. Un mécanisme de motion (7) d'un siège d'un véhicule selon la revendication 1 ou 2, **caractérisé par** un moteur linéaire de type de double côté (12) comprenant deux aimants rangés (6) qui sont fixés sur la face interne des bords verticaux du rail (3) dans lequel les pôles sont opposés ; et comprenant des bobines d'armature (8) qui sont fixées sur la couverture (2) et qui étend à l'intérieur du rail (3) au canal (13) situé entre aimants (6) qui sont placés sur deux côtés.

4. Un mécanisme de motion (7) d'un siège d'un véhicule selon la revendication 3 ; **caractérisé par** un moteur linéaire (12) qui comprend des bobines d'armature (8) situées sur la partie basse de la couverture (2) formant un couvercle et un revêtement pour les bobines (8) ; ces bobines s'attachant sur le support constituée d'un matériel durable.

5. Un mécanisme de motion (7) d'un siège d'un véhicule selon la revendication 1 ou 2 ; **caractérisé par** un moteur linéaire de type d'un côté single (12) comprenant des bobines d'armature (8) qui sont situées à l'intérieur du rail (3) et des aimants (6) rangés de manière single qui sont fixés à l'intérieur de la couverture (2).

6. Un mécanisme de motion (7) d'un siège d'un véhicule selon la revendication 1 ou 2 ; **caractérisé par** un moteur linéaire du type cylindrique (12) qui a des bobines (8) et des aimants (6) positionnés comme cylindres télescopiques pouvant décaler de manière télescopique à l'intérieur l'un l'autre et dans lequel chaque élément (6 ou 8) est fixé séparément sur le rail ou sur la couverture (2 ou 3).

7. Un mécanisme de motion (7) d'un siège d'un véhicule selon l'une quelconque des revendications précédentes, **caractérisé par** un ensemble électronique (9) comprenant un circuit électronique de force (15) qui régule toutes les opérations au moyen d'un capteur déterminant la position des bobines ou une opération logicielle déterminant la position sans capteur.

8. Un mécanisme de motion (7) d'un siège d'un véhicule selon la revendication 7 ; **caractérisé par** un circuit électronique de force comprenant des conducteurs qui alimentent le moteur (12) et qui portent des donnés produites par l'onduleur (14), par le circuit de contrôle (15) et par le passager conformément à la demande de changement de position (16) et à la demande de détermination de direction (17).

9. Un mécanisme de motion (7) d'un siège d'un véhicule selon l'une quelconque des revendications précédentes ; **caractérisé par** un levier dans lequel les conducteurs sont attachés, et qui est situé dans le flanc du siège et qui détermine la motion en arrière et en avant quand le passager le bouge.
